# EUROPEAN PATENT APPLICATION

(11) **EP 3 061 650 A1**
(43) Date of publication of application: **31.08.2016**
(21) Application number: 15156591.8
(22) Date of filing: 25.02.2015
(51) Int. Cl.: B60Q 1/00, B60Q 1/26, B60Q 1/32, B60Q 1/34, B60Q 1/38, B60Q 11/00, F21S 8/10

(54) **Direction indicator for long vehicles**

(71) Applicant: Fleet Sentinel Ltd, Darwen, Lancashire BB3 0DB (GB)
(72) Inventor: Ratcliffe, Stephen, Blackburn, Lancashire BB1 2NN (GB); Taylor, Louise, Preston, Lancashire PR2 9FP (GB)
(74) Representative: Veni Swiss & European Patent Attorneys

(57) **Abstract**

A direction indicator light is described for mounting along the side of a long road vehicle. The direction indicator light comprises a longitudinal lighting strip (1) comprising multiple lighting elements (3) located in a recess or cavity (6) in a protective housing profile (2). The lighting strip (1) flashes when the long road vehicle makes a turn, thereby warning cyclists or other road users adjacent to the vehicle, and the housing profile (2) protects the lighting elements (3) against side impacts from fork-lift trucks or the like.

## Description

The invention relates to external lighting for long vehicles and in particular to direction indicators for fitting to the sides of such vehicles.

### Background of the invention

It is unfortunately not uncommon for vulnerable road users, such as cyclists, to be killed or injured in collisions with long vehicles such as articulated lorries. Such collisions may occur for example when a long vehicle is making a turn to the vehicle's near side, and while a cyclist is cycling between the near side of the vehicle and the kerb or other roadside feature. In such a situation, the driver of the long vehicle may have limited visibility of the cyclist in the vehicle's near-side mirrors, and the cyclist may become trapped between the side of the long vehicle and the kerb, and be thus unable to avoid a collision with the long vehicle. Due to its length, and the arrangement of its axles along its length, a long vehicle must follow a particular line on the road when making a tight turn to its near side. The front part of the vehicle typically travels well past the turning before it starts to bear in towards the near side, in order that the wheels of the rear axle(s) can travel around the turn without touching the kerb. Because of this style of movement, the cyclist may not be aware until it is too late that the long vehicle is going to turn. A similar danger may arise for pedestrians, for example when a long vehicle manoeuvers around a tight near-side turn and accidentally mounts the kerb. Pedestrians may be injured or killed because they are unaware that the vehicle is turning. In order to reduce the risk of such collisions, it has been proposed to fit long vehicles with sensors and cameras, with the aim of providing the driver with more information about the presence of cyclists, pedestrians or other road users who are in the vicinity of the side of the long vehicle. However, a driver who is busy negotiating city traffic may experience information overload, and may not make full use of the information provided by a sensor or a camera. Audible warnings have also been proposed, but are ineffective against the typical city cyclist wearing earphones.

The dangers described above apply typically when a long vehicle is manoeuvering around the streets of a town or city, for example. However, a corresponding situation may arise on motorways (freeways) or main roads (highways) when, for example, a long vehicle overtakes another vehicle or moves between lanes. In such a situation, the driver of the long vehicle may be unaware of another vehicle alongside it, and may thus collide with the vehicle when changing lanes. Similarly, the driver of the vehicle alongside may not realise until it is too late that the side of the long vehicle is moving across towards his or her vehicle.

It is known to fit a so-called side repeater indicators to the sides of vehicles. These are individual lamps which are added to the same circuit as the vehicle's front and rear indicators. On long vehicles, which may be subjected to side impacts from fork-lift trucks, for example Such repeater indicators are typically mounted on the side of the cab and offer a very poor warning to or illumination of the cyclist next to a rearward part of the vehicle.

### BRIEF DESCRIPTION OF THE INVENTION

The invention aims to address the above and other disadvantages with the prior art by providing a direction indicator light as set out in appended claim 1 and a road vehicle as set out in appended claim 11. Further variants of the inventive direction indicator and road vehicle are set out in dependent claims 2 to 10 and 12 to 15 as well as in the following description.

### DETAILED DESCRIPTION OF THE INVENTION

The invention will now be described in detail with reference to the drawings, in which:
Figure 1 shows in schematic plan view an example of a lighting strip for a direction indicator light according to the invention.
Figure 2 shows in schematic view an example of a direction indicator light according to the invention.
Figure 3 shows in schematic sectional view a cross-section of an example of a lighting strip for a direction indicator light according to the invention.
Figure 4 shows in schematic side elevation a first example of a long road vehicle according to the invention.
Figure 5 shows in schematic side elevation a second example of a long road vehicle according to the invention.
Figures 6 to 11 show in schematic sectional view cross-sections of further example lighting strips for direction indicator lights according to the invention.

Note that the drawings are intended merely as illustrations of example embodiments of the invention, and are not to be construed as limiting the scope of the invention. Where the same reference numerals are used in different drawings, these reference numerals are intended to refer to the same or corresponding features. However, the use of different reference numerals should not necessarily be taken as an indication that the referenced features are dissimilar.

References in this text to a long road vehicle are intended to include any wheeled land vehicle of seven metres or more in total length having steerable wheels, such as a rigid or articulated lorry, a van or pickup, a tractor-and-trailer combination, a trailer or caravan, or a mobile crane for example.

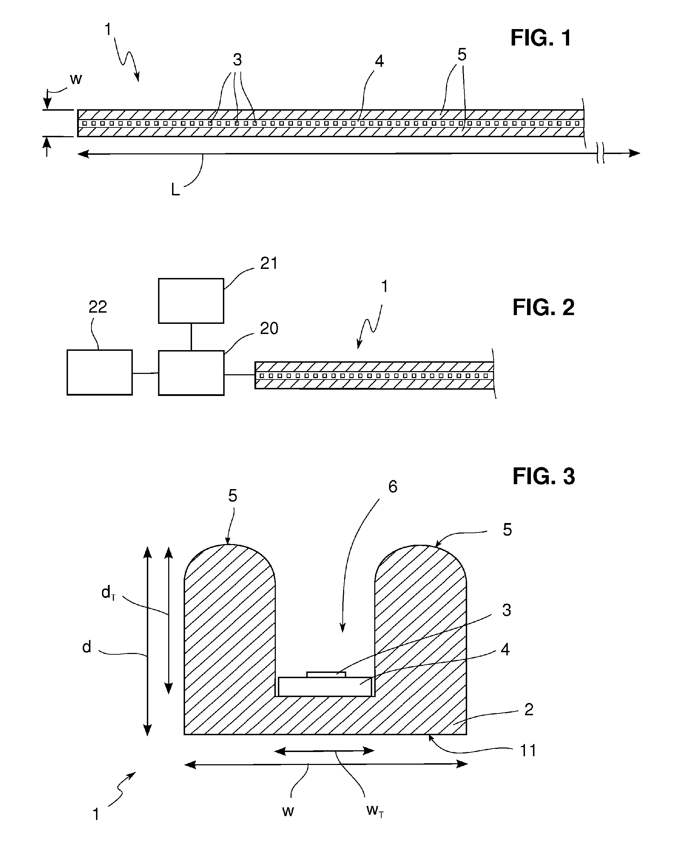

Figure 1 shows an example implementation of a direction indicator light according to the invention. As shown in the illustrated example, the direction indicator light comprises a lighting strip 1 of width w and length L, which in turn comprises a protective housing profile 2 and a plurality of lighting elements 3 arranged at intervals along the length of the lighting strip 1. The width w of the strip may preferably be between 20mm and 100mm, or more preferably between 30mm and 70mm, and the total length L may preferably be at least 2 metres, and more preferably at least 3.5 metres. The strip may be fitted as a single continuous strip, or as multiple individual lengths of strip, in which case each of the individual lengths may preferably be at least 50cm long, fitted end to end or spaced apart.

The lighting elements 3 may be mounted on or in a connection strip 4 arranged in a recess along the protective housing profile 2. Projection portions 5 of the protective housing profile 2 stand proud of the lighting elements 3, thereby offering protection to the lighting elements 3 and the connection strip 4 against impact from a direction perpendicular to the plane of the lighting strip (ie the plane of the drawing). As will be described below, the lighting strip is configured such that it can be mounted along a lateral surface of a long road vehicle. The lighting elements 3 are preferably distributed at intervals, for example with an even distribution, along the length of the lighting strip 1. The longitudinal interval spacing between the lighting elements 3 may be between 1cm and 20cm, or more preferably between 2cm and 10cm.

Figure 2 illustrates an example of a connection arrangement to the lighting strip 1 of a side-mounted direction indicator light. In this example, the direction indicator light is configured to act in slave mode, such that the lighting strip 1 flashes when the vehicle's front and/or rear direction indicators are activated. Power for the lighting elements 3 is supplied from a power supply 22, such as a battery, which may for example comprise a main battery of the vehicle or a different battery, to a lighting strip control circuit 20. Power may be supplied to one end of the lighting strip 1 or to both ends, and/or to multiple points along the lighting strip 1. An indicator signal detector circuit 21 detects the operation status of the vehicle's front and/or rear direction indicators. This detection may be performed electrically, for example, by means of a signal sensing wire from the vehicle's direction indicator circuit, or it may be performed optically, using an optical sensor mounted in the vicinity of one of the vehicle's front or rear direction indicators, or it may be performed wirelessly, using a remote sensor communicating wirelessly with the indicator signal detector circuit 21. Detection of the operation status may comprise detecting an illumination status (eg on or off) of one or more of the vehicle's front and/or rear direction indicators, or it may comprise detecting a switching status of a switch or switching circuit by means of which the vehicle's driver actuates the vehicle's front and/or rear direction indicators. In this way, electrical power may advantageously be supplied to the lighting elements 3 of the side-mounted direction indicator light of the invention in such a way as to isolate its power supply 22 from the power circuit or circuits of the vehicle's front and/or rear direction indicators, such that the vehicle's front and/or rear direction indicators can continue to function if the side-mounted direction indicator light is damaged, or vice-versa. Or, instead of or in addition to operating in the slave mode described above, the direction indicator light may be powered and/or controlled by the same circuit or circuits which power and/or control the vehicle's front and/or rear direction indicators. The lighting strip control circuit 20 may be adapted to be able to flash the lighting strip 1 with a different frequency or pattern than the front and rear indicators. It may flash all of the lighting elements with the same pattern, or it may flash them sequentially along the length of the lighting strip 1, on in any other spatial or temporal pattern.

The lighting strip control circuit 20 may comprise an ambient light sensor for varying the brightness of the lighting elements 3, for example to make them brighter in daylight and less bright at night. It may comprise a proximity sensor for detecting a presence of a cyclist or other vehicle adjacent to the vehicle and vary the brightness and/or the flashing pattern in dependence on the signal from the proximity sensor. It may be configured to control the operation of the lighting strip 1 selectively, such as only when a vehicle or person is detected adjacent to the long road vehicle.

Figure 3 shows a cross-section through an example of a lighting strip 1 such as that depicted in figures 1 and 2. In this example, the protective housing profile 2 has a substantially U-shaped cross-section, and may be formed for example as a continuous extrusion of an elastomeric material such as rubber, a rubber compound or a silicone material. The trough 6 of the U-shaped profile, also referred to as a recess, accommodates lighting elements 3, which may be attached to and/or connected by a connection strip 4. The arms 5 of the U-shaped profile form protrusions for protecting the lighting elements 3 and the connection strip 4 against impact when the lighting strip 1 is mounted on the side of a vehicle. Note that a U-shaped profile is merely one example of a suitable shape for the protective housing profile 1, and other shapes of profile may be used.

By dispensing with one of the arms of the U-shaped profile, for example, an approximately L-shaped profile can still afford some protection against side impact for the lighting elements 3.

The example protective housing strip 2 is described as being formed of an elastomeric material. This has the advantage of being flexible, elastic and resilient, which make the lighting strip 1 easier to transport, store and fit to the road vehicle. In order to withstand impacts from other vehicles or loading equipment such as fork-lifts, the elastomeric material preferably has a hardness of at least 60 Shore-A, and more preferably at least 75 Shore-A. A rigid material such as a metal (eg steel or aluminium) may be used instead of the elastomeric material, in order to provide a more robust impact protection for the lighting elements 3. The lighting strip 1 is shaped such that the rear surface 11 may be secured to a surface, preferably a rigid vertical surface, of the side of the road vehicle.

The example protective housing profile illustrated in figure 3 may have a width w of between 20mm and 100mm, for example or more preferably between 30mm and 70mmm. The width w_{T} of the trough 6 may be between 5mm and 50mm, or more preferably between 10mm and 30mm. The depth d of the protective housing profile may be between 5mm and 70mm, or more preferably between 15mm and 40mm, while the depth d_{T} of the trough 6 (or the height of the protrusions 5) may be less than 70mm or more preferably less than 30mm.

The lighting elements 3 preferably comprise light-emitting diodes (LEDs), and are shown mounted on a connecting strip 4, which facilitates assembly and fitting of the lighting strip 1 and may provide electrical power and/or electrical control connections to the lighting elements 3. The connection strip 4 may be made from a flexible material such that the lighting strip 1 as a whole may in turn also be flexible. Alternatively, the lighting strip 1 may be formed as a rigid strip or series of rigid strips. Control or power supply circuitry and/or wiring (for example as illustrated in figure 2) may be embedded or housed in the material of the connecting strip 4 and/or in the material of the protective housing strip 2. The lighting elements 3 and/or the connecting strip 4 may be bonded, glued, welded or otherwise secured in the trough or recess 6, or embedded in a transparent or translucent potting material. Alternatively, the connecting strip 4 may be secured by a positive or friction-fit, for example with the walls of the protective housing profile 2. In order to facilitate repair of the lighting strip 1, the connection strip 4 may be arranged in electrically and/or mechanically discrete sections such that one of the sections may be replaced and/or electrically bypassed without the need to replace the other sections comprised in the length of the lighting strip 1. The lighting strip 1 may be pre-assembled and supplied in such a way that it can be cut to a desired length, for example by the person fitting it to the vehicle.

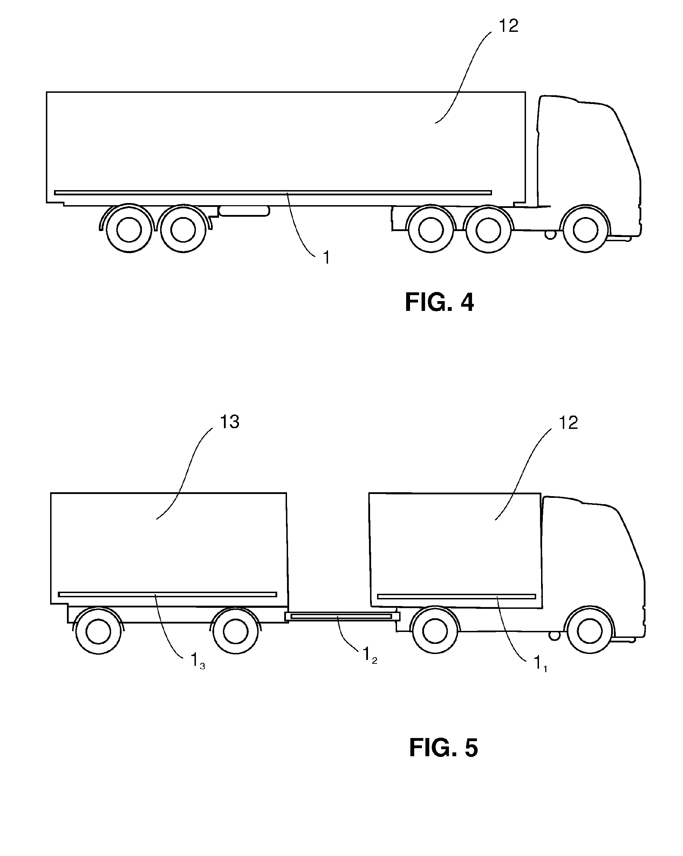

Figure 4 illustrates an example arrangement in which the lighting strip 1 of a direction indicator according to the invention is fitted to the side of a long road vehicle 12 such as a truck. The lighting strip 1 is preferably mounted at a height of between 70cm and 2.5m above the road, or more preferably between 1m and 1.5m, so that it can both alert and illuminate any road user who is adjacent to the side of the truck 12. The combined brightness of the lighting elements 3 of the lighting strip 1 is preferably at least 250 lumens per metre of the strip, and more preferably at least 400 lumens per metre of the strip, so that the adjacent cyclist is provided with a strong flashing warning indication that the long vehicle is turning or will turn. Bright lighting elements 3 also illuminate the cyclist so that he or she can be seen better by the driver in the vehicle's mirrors or on CCTV. The benefit of this illumination is greatly increased at night, and especially when the cyclist is wearing high-visibility reflective clothing. As the signal is visual and very conspicuous, any cyclist riding at the side of the vehicle will be left in no doubt that the driver of the vehicle intends to make a turn; in this event the cyclist can take appropriate and defensive action to protect him or herself. The lighting elements 3 are preferably selected to emit an amber-coloured light, in keeping with conventional indicators. An amber coloured light has a wavelength substantially between 570nm and 610nm. This color may preferably be achieved by using lighting elements 3 (eg LEDs) which themselves emit amber light. However, lighting elements 3 which emit light of a first colour (eg white or near-white) may be used with a coloured transparent or translucent filter element to produce the amber colour.

The light strip 1 has a total length which is preferably at least two metres, and more preferably at least half of the length of the vehicle 12, or at least half of the length of that part of the vehicle which is aft of the cab. In the illustrated example, the lighting strip 1 is approximately 70% of the length of the truck. The total length of the lighting strip may be the length of a single contiguous lighting strip, as illustrated in figure 4, or it may comprise multiple smaller lengths or sections of lighting strip 1, which may be spaced apart horizontally and/or vertically. In the latter case the spaces are not included in the calculation of the length figure mentioned above. The lighting strip 1 may be curved or otherwise fitted around features of the vehicle 12 such as the wheel arches. On vehicles with underslung impact bars, the lighting strip 1 may be fitted to the impact bars. This may be advantageous, for example in the case of curtain-sided vehicles, on which there may not be a convenient surface on the edge of the load-bed for fitting the lighting strip 1.

Figure 5 shows a truck and trailer arrangement in which lighting strips 1₁, 1₂ and 1₃ are fitted to the sides of the truck 12, the towing hitch and the trailer 13 respectively. For the purposes of defining the invention, the truck 12 and the trailer 13 may be considered as separate vehicles, or they may be considered as sub-components of the same vehicle. Thus, the lighting strip 1 may be provided on the side of the truck 12, and/or the trailer 13 and/or the towing hitch.

The combined light strip 1 comprising the protective housing profile and the lighting elements can be supplied as in modular sections or as a continuous piece which can be tailor cut to any length. As mentioned above, it is preferably flexible and can be attached to flat, straight or curved surfaces, such as the edge of a wheel arch. The lighting strip 1 can be applied to the road vehicle using adhesive, screws or bolts. The ends of the lighting strip may be capped with elastomeric caps and/or sealed with a waterproof sealant. The light strip 1 is preferably sealed against moisture ingress in such a manner as to protect the lighting elements 3 to a protection rating of IP65, or more preferably to IP67.

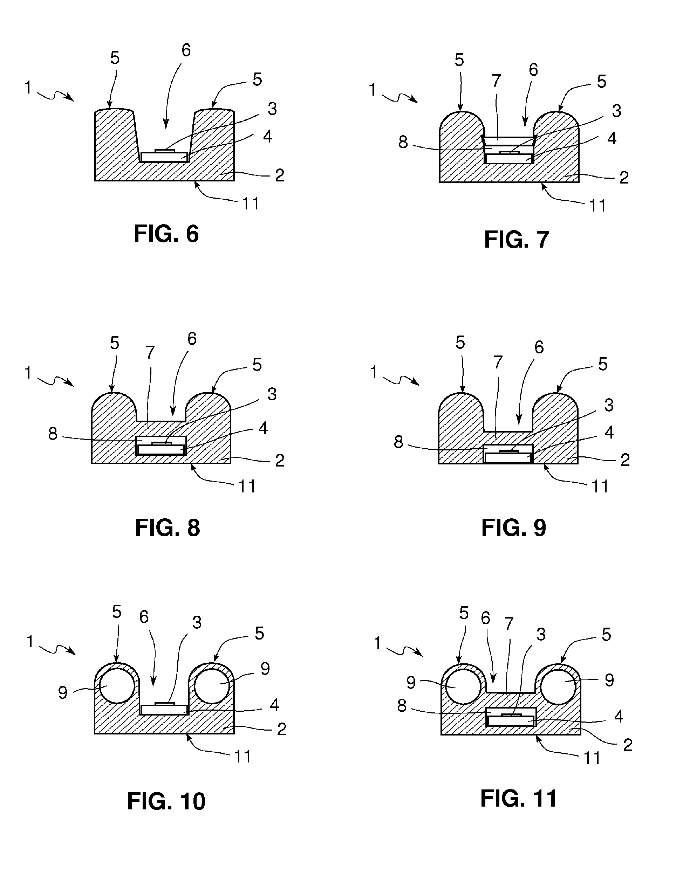

Figure 6 shows a lighting strip 1 in which the recess 6 is tapered to allow the lighting elements 3 to be visible from a larger vertical angle when the lighting strip 1 is mounted on the side of the road vehicle 12, 13. When in situ, the lower tapered side also helps water to drain from the recess.

Figure 7 shows a another example of a lighting strip in which a transparent or translucent window strip 7 is fitted over the lighting elements 3 to protect the lighting elements 3 against weather or other damage. The window strip 7 may be glued, bonded, welded or otherwise attached in position, or it may be held in place by the elasticity of the side-walls of the recess 6.

The protective housing profile 2 may be formed from a transparent or translucent material, in which case the lighting elements may be arranged inside a cavity 8 in the profile 2, for example as shown in figures 8 and 11, or at the rear of the protective housing profile 2, as shown in figure 9. In such cases, the front recess 6 may be dispensed with and the two lateral protrusions may be formed as a single protective protrusion (not shown) in front of the lighting elements 3. The window 7 or the transparent material mentioned above may serve as a diffusor for enhancing the visibility of the emitted light from the lighting elements 3.

Figures 10 and 11 show examples of lighting strips 1 in which the protrusion or protrusions 5 of the protective housing profile 2 comprise a cavity or tube 9 which can be used, in addition to protecting the lighting elements, for detecting an impact against the side of the vehicle. A pneumatic pulse from the impact, or an electrical signal from an impact sensor in the tube, can be used to generate a warning signal which may be communicated to the driver or to a security recording system as an alarm event.

Modern vehicles may be equipped with CCTV or recording equipment in the cab for security or in the case of accident. Information from the side-mounted direction indicator light of the invention may be supplied to such a recording system to record when or whether the side-mounted direction indicator light was operative, and/or any impact information mentioned above.

Some rubber strips will incorporate, or be used in conjunction with, reflective tape where vehicles are required by law to display such.

## Claims

1. A direction indicator light for fitting to a side of a long road vehicle (12, 13), **characterised by**
a longitudinal lighting strip (1) comprising a plurality of lighting elements (3) distributed longitudinally at intervals along the length (L) of the lighting strip (1), the lighting elements (3) being operable to emit light having a wavelength in the range 570nm to 610nm and a combined luminance of at least 250 lumens per metre of the length (L) of the lighting strip (1), and
a longitudinal protective housing profile (2) comprising a mounting surface (11) for attaching to the side of the vehicle (12, 13), at least one recess (6) or cavity (10) for accommodating the said lighting elements (3), and at least one protrusion (5) extending beyond the recess or cavity (6) in a direction away from the mounting surface (11) such that, when the mounting surface (11) of the protective housing profile (2) is attached along the side of the long road vehicle (12, 13), the protrusion (5) protects the lighting elements (3) in the at least one recess (6) or cavity (10) against side impacts against the vehicle (12, 13).

2. Direction indicator light according to claim 1, comprising an indicator signal detector circuit (21) for detecting an indicator operation of front and/or rear direction indicators of the road vehicle (12, 13), and a lighting strip control circuit (20) configured to flash the lighting elements (3) according to a predetermined flashing sequence when the indicator operation is detected by the indicator signal detector circuit (21).

3. Direction indicator light according to claim 1 or claim 2,
wherein the distribution interval spacing of the lighting elements (3) is less than 20cm, and/or wherein the lighting strip (1) has a total length (L) of at least 3.5 metres.

4. Direction indicator light according to one of the preceding claims, wherein the longitudinal protective housing profile (2) comprises at least one opening or window (6, 7) for allowing light from the lighting elements (3) to be emitted from the lighting strip (1) at least in a direction substantially perpendicular to the longitudinal axis of the lighting strip (1) and away from a mounting surface (11) of the lighting strip.

5. Direction indicator light according to one of the preceding claims, wherein the protective housing profile (2) comprises a substantially U-shaped profile (2) formed from an elastomeric material having a Shore-A hardness of at least 60, wherein the recess (6) is formed in the trough of the U-shaped profile (2) and the side-walls (5) of the U-shaped profile (2) form the at least one protrusion.

6. Direction indicator light according to one of the preceding claims, comprising a longitudinal diffuser strip (7, 2) arranged for diffusing light emitted by the lighting elements (3).

7. Direction indicator light according to claim 6, wherein the protective housing profile (2) is formed partly or wholly from a translucent or transparent material and thereby forms the diffuser strip (7).

8. Direction indicator light according to one of the preceding claims, wherein the lighting elements (3) are LEDs arranged along at least one common connecting strip (4) for conveying electrical power to the lighting elements (3), and wherein the at least one common connecting strip (4) is arranged in the said recess or cavity (6).

9. Direction indicator light according to one of the preceding claims, wherein the lighting strip control circuit (20) is configured to vary the peak brightness of the lighting elements (3) in dependence on ambient light conditions.

10. Direction indicator light according to one of claims 2 to 8, comprising a longitudinal reflective strip and/or at least one pneumatic impact sensor (9) arranged along the longitudinal lighting strip (1).

11. Road vehicle (12, 13) comprising a direction indicator light according to one of claims 1 to 10, hereafter referred to as a side indicator, wherein the road vehicle (12, 13) is at least seven metres long, and wherein the longitudinal lighting strip (1) of the side indicator is attached along a majority of the length of a side of the road vehicle (12, 13).

12. Road vehicle (12, 13) according to claim 11, wherein the longitudinal lighting strip (1) is attached along the side of the long road vehicle (12, 13) at a height of between 70cm and two metres above the road surface.

13. Road vehicle (12, 13) according to one of claims 11 to 12,
wherein the side indicator light is powered by a first power supply circuit (22) and wherein the front and/or rear direction indicator lights of the road vehicle (12, 13) are powered by a second power supply circuit, such that the side indicator light ( is able to operate independently of the second power supply circuit.

14. Road vehicle (12, 13) according to one of claims 11 to 13, comprising an underslung side-impact bar extending along the side of the road vehicle (12, 13), wherein the longitudinal lighting strip (1) is attached to the underslung side-impact bar.

15. Road vehicle (12, 13) according to one of claims 11 to 14, comprising a surveillance system for recording driving conditions of the road vehicle (12, 13), wherein the surveillance system is configured to record an operating status of the side indicator.
